# EUROPEAN PATENT APPLICATION

(11) **EP 4 574 537 A1**
(43) Date of publication of application: **25.06.2025**
(21) Application number: 24220482.4
(22) Date of filing: 17.12.2024
(51) Int. Cl.: B60L 50/64, H01M 10/04, H01M 10/052, H01M 10/0562, H01M 50/209, H01M 50/242, H01M 50/249

(54) **BATTERY PACK FOR AN ELECTRICALLY DRIVEN ROAD VEHICLE AND METHOD FOR COMPENSATING THE TICKNESS VARIATION OF AN ELECTROCHEMICAL CELL FOR THE BATTERY PACK**

(30) Priority: 19.12.2023 IT 202300027171
(71) Applicant: FERRARI S.p.A., 41100 Modena (IT)
(72) Inventor: VENTURI, Enrico, 41100 Modena (IT); DI COLA, Angelica, 41100 Modena (IT); LIGABUE, Elena, 41100 Modena (IT)
(74) Representative: Studio Torta S.p.A.

(57) **Abstract**

A battery pack (6, 6', 6") for an electric road vehicle (1) comprising: a casing (10); a first cell (11, 12) with a first thickness (L) along a first direction (X) and accommodated inside said casing (10); a first pushing member (61, 62) movable relative to the casing (10) and operatively connected to the first cell (11, 12); a first element (41, 42) movable relative to said casing (10) along a second direction (Z) transverse to the first direction (X) and operatively connected to the first pushing member (61, 62) so as to be movable along the second direction (Z) following the movement of the first pushing member (61, 62) along the first direction (X).

## Description

### CROSS-REFERENCE TO RELATED APPLICATIONS

This patent application claims priority from Italian patent application no. 102023000027171 filed on December 19, 2023, the entire disclosure of which is incorporated herein by reference.

### TECHNICAL FIELD

The invention relates to a battery pack for an electric road vehicle.

The invention also relates to a method for compensating the thickness variation of an electrochemical cell for a battery pack for an electric or hybrid road vehicle.

### BACKGROUND

The expression "electric road vehicle" indicates, for the purposes of this description and of the appended claims, both road vehicles with a merely electric powertrain and road vehicles with an electric-combustion hybrid powertrain equipped with at least one battery pack capable of providing electrical power.

The battery pack comprises, in a known manner, a plurality of electrochemical cells, which are connected to one another in series and in parallel so as to obtain the desired total voltage and energy density.

Each cell comprises, extremely concisely, a positive electrode commonly referred to as cathode, a negative electrode commonly referred to as anode and a chemical substance commonly referred to as electrolyte, in which the positive and negative electrodes are immersed.

It is also known to use cells with a solid-state electrolyte and cells with a metal lithium anode, in order to obtain a high energy density deemed ideal for the implementation of electric powertrains in the automotive industry.

Each cell has a thickness that is smaller than the relative length and width.

Cells with a solid-state electrolyte undergo, as a result of the electrochemical reaction taking place, an unavoidable increase in thickness during operation.

It is also necessary to ensure that the solid-state electrolyte constantly remains in contact with the electrodes by exerting a pressure and, hence, a force upon the cell from outside the cell itself.

This force must range from a minimum value to a maximum value for the entire life of the battery, thus even when the thickness of the cell increases during use.

In order to meet these requirements, it is known to use a containing structure consisting of elastically deformable compensation elements arranged in contact with the cells according to the direction of the thickness of the cells.

These elements are capable of varying their thickness and of exerting an increasing force upon the cells as the thickness of the cells increases.

However, new-generation cells have high thickness variations and require the application of particularly high maximum force values at the end of life.

This inevitably leads to the use of bulky and heavy rubber elements, consequently jeopardizing the energy density and the final weight of the battery pack.

In addition, the stiffness of the compensation elements needed to obtain the required pressure does not compensate for the tolerances of the components of the individual cells, thus making it necessary to perform, during the assembly phase, an adjustment of the pressure acting upon each cell.

Known battery packs further comprise a plurality of cooling fins interposed between the cells and designed to cool the cells.

More precisely, the battery packs have, proceeding along the thickness, a modular configuration, in which each module sequentially comprises a first cell, a layer of material resistant to high temperatures and to thermal shock, a compensation element, a second cell and a cooling fin.

Motor vehicle manufacturers need to make sure that solid-state electrolyte cells operate correctly over time, limiting at the same time the maximum forces exerted by the containing structure so as to reduce the overall weights and volumes thereof, thus consequently reducing the dimensions and the weight of the battery pack.

### SUMMARY

The object of the invention is to provide a battery pack for an electric road vehicle, which allows manufacturers to fulfil at least one of the aforesaid needs in a simple and economic fashion.

The aforesaid object is reached by the invention, as it relates to a battery pack for an electric or hybrid road vehicle as defined in claim 1.

The invention relates to a method for compensating the thickness variation of an electrochemical cell for a battery pack for an electric or hybrid road vehicle as defined in claim 13.

### BRIEF DESCRIPTION OF THE DRAWINGS

The invention will be best understood upon perusal of the following detailed description of three embodiments, which are provided by mere way of non-limiting example, with reference to the accompanying drawings, wherein:
- figure 1 is a perspective view of a motor vehicle with a battery pack according to the invention, which is shown in a merely schematic manner;
- figure 2 is a front view of a casing of the battery pack according to a first embodiment of the invention;
- figure 3 is a view from the bottom of the casing of the battery pack of figure 2;
- figure 4 is a cross section along line IV-IV of figure 3;
- figure 5 is a cross-section along line V-V of figure 4;
- figure 6 is a cross section along line VI-VI of figure 2;
- figure 7 is a cross section along line VII-VII of figure 2;
- figure 8 is a front view of a casing of the battery pack according to a second embodiment of the invention;
- figure 9 is a view from the bottom of the casing of the battery pack of figure 8;
- figure 10 is a cross section along line X-X of figure 8;
- figure 11 is a cross section along line XI-XI of figure 8;
- figure 12 is a cross section along line XII-XII of figure 9;
- figure 13 is a cross section along line XIII-XIII of figure 12;
- figures 14 and 15 show the trend of the force exerted by the cells upon the containing elements of the battery pack as the thickness of the cells varies, with reference to a known solution and to this invention, respectively; and
- figure 16 shows a cross section corresponding to the cross section along line VI-VI of figure 2 of a battery pack according to a third embodiment of the invention.

### DESCRIPTION OF EMBODIMENTS

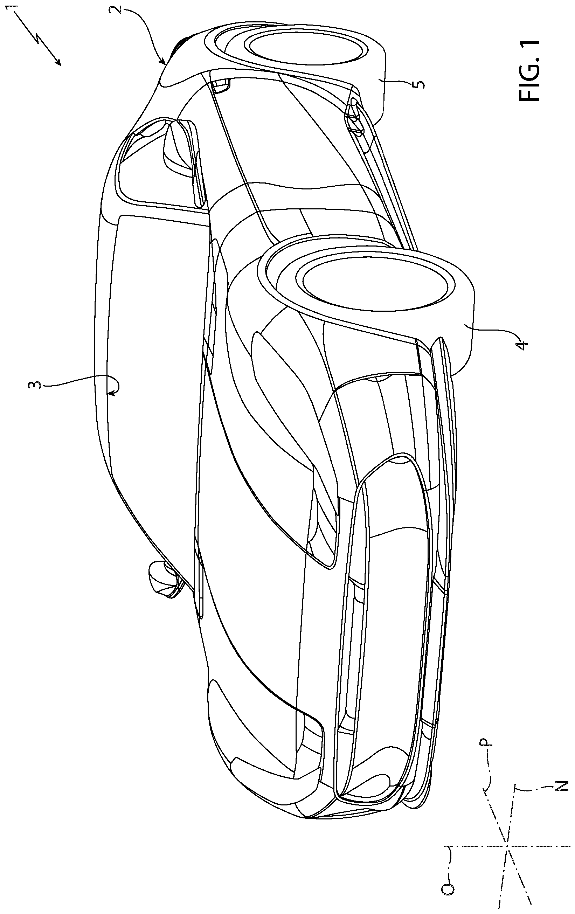

With reference to Figure 1, number 1 indicates, as a whole, a road vehicle.

The vehicle 1 is an at least partially electric vehicle.

The expression "at least partially electric vehicle" indicates, for the purposes of this description, both a road vehicle with a merely electric powertrain commonly known as BEV ("Battery Electric Vehicle") and road vehicle with an electric-combustion hybrid powertrain equipped with at least one battery pack capable of providing electrical power.

Hereinafter, expressions such as "at the top", "at the bottom", "at the front", "at the back", "left", "right" and others similar to them are used with reference to a normal travel direction of the motor vehicle 1.

Furthermore, it is possible to define:
- a longitudinal axis P integral to the motor vehicle 1, which, in use, is horizontal and parallel to a normal travel direction of the motor vehicle 1;
- a transverse axis N integral to the motor vehicle 1, which, in use, is horizontal and orthogonal to the axis P; and
- an axis O integral to the motor vehicle 1, which, in use, is vertical and orthogonal to the axes P, N.

More in detail, the vehicle 1 basically comprises:
- a body 2 defining a passenger compartment 3;
- a pair of front wheels 4 and rear wheels 5; and
- a battery pack 6.

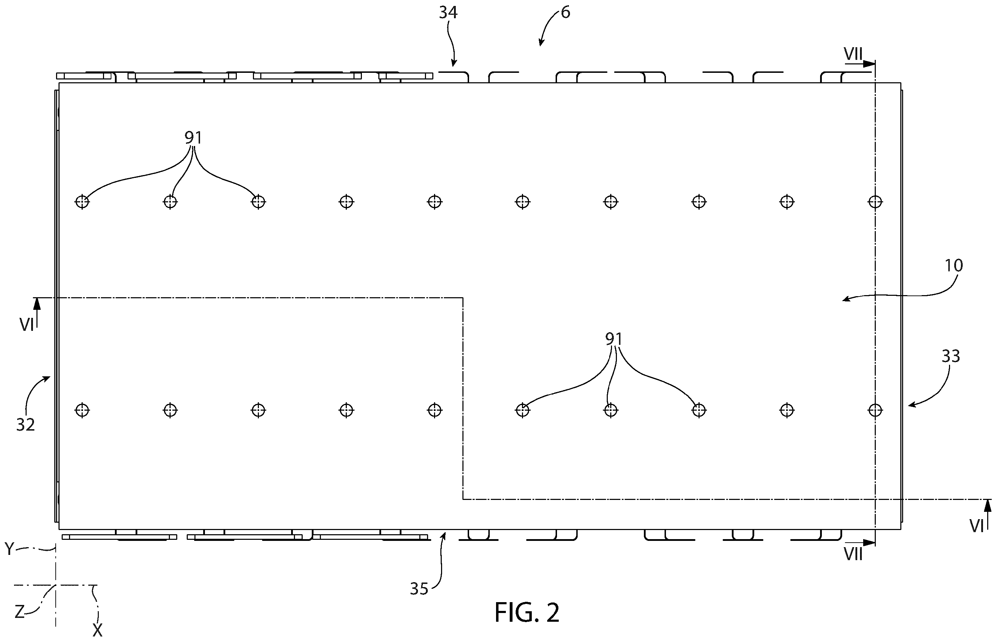

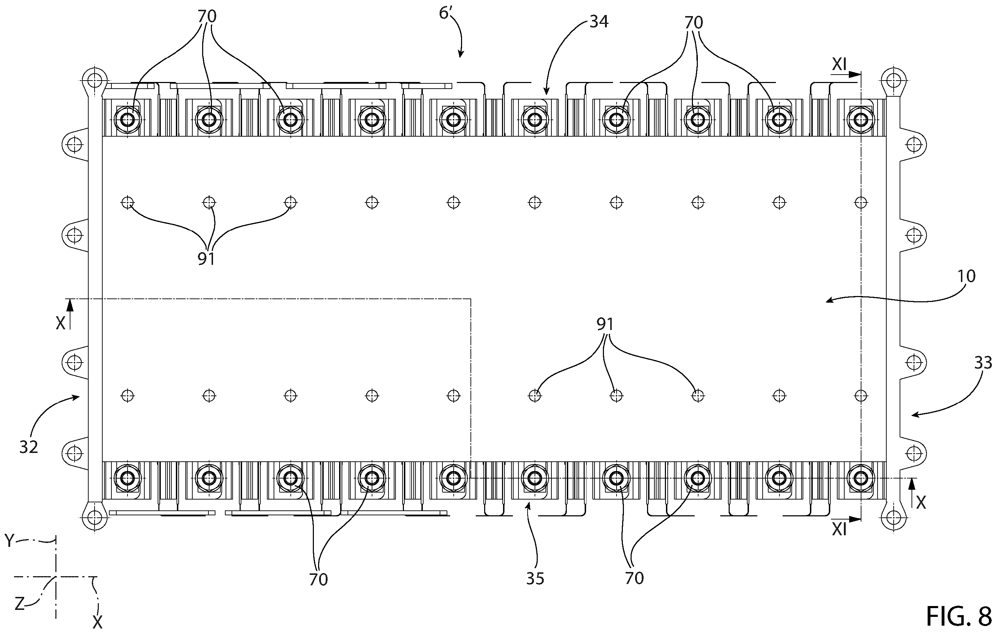

With reference to figures 2 to 8, the battery pack 6 basically comprises:
- a casing 10; and
- a plurality of cells 11, 12 housed inside the casing 10 and connected to one another in series and in parallel so as to obtain the desired total voltage and energy density.

In particular, the cells 11, 12 are side by side parallel to a direction X.

Each cell 11, 12 comprises, extremely concisely and in a known manner, a positive electrode commonly referred to as cathode, a negative electrode commonly referred to as anode and a chemical substance commonly referred to as electrolyte, in which the positive and negative electrodes are immersed.

More in detail, the casing 10 has the shape of a parallelepiped.

The casing 10 has a length along a direction Y orthogonal to the direction X, a width along the direction X and a height along a direction Z orthogonal to the directions X, Y.

In particular, the height of the casing 10 is smaller than the length and width of the casing 10.

Similarly, each cell 11, 12 has a length along the direction Y, a thickness L along the direction X and a height along the direction Z.

In particular, the thickness L of each cell 11, 12 along the direction X is smaller than the length and height of the same cell 11 along the respective directions Y, Z.

The casing 10 is delimited by:
- a pair of walls 30, 31 opposite one another along the direction Z and lying on respective planes orthogonal to the direction Z;
- a pair of walls 32, 33 opposite one another along the direction X, lying on respective planes orthogonal to the direction X and interposed along the direction Z between the walls 30, 31; and
- a pair of walls 34, 35 opposite one another along the direction Y, lying on respective planes orthogonal to the direction Y and interposed along the direction Z between the walls 30, 31 and along the direction X between the walls 32, 33.

The walls 32, 33 can be made of an electrically insulating material.

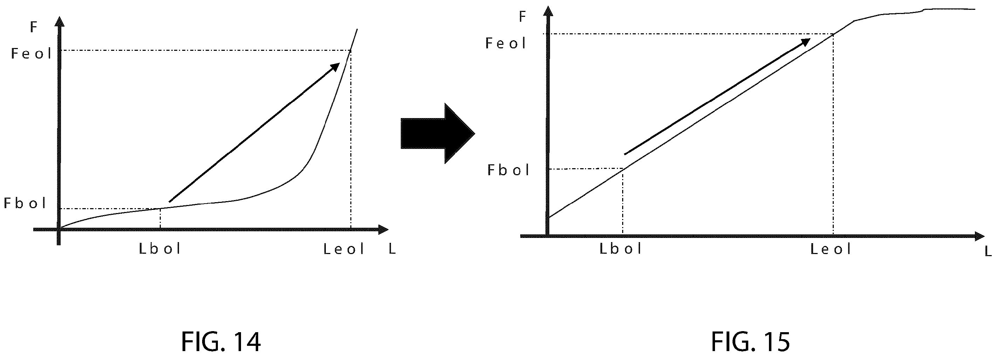

Following the electrochemical reaction performed, the thickness L of the cells 11, 12 parallel to the direction X increases during operation from a value Lbol assumed at the beginning of the use of the cells 11, 12 to a value Leol assumed at the end of the operating life of the cells 11, 12 (Figure 15).

In particular, the minimum value Fbol of the force F corresponds to the minimum value Lbol of the thickness L of the cells 11, 12 and the maximum value Feol of the force F corresponds to the maximum value Leol of the thickness L of the cells 11, 12.

The battery pack 6 further comprises:
- a plurality of layers 17 made of a material resistant to high temperature and thermal shock, for example mica, lying on a plane substantially orthogonal to the direction X and spaced apart from one another along the direction; and
- a plurality of heat dissipation elements 16a, 16b, for example cooling fins, made of a thermally conductor material, mainly lying on a plane orthogonal to the direction X and spaced apart from one another along the direction X.

The cells 11, 12, the layers 16a, 16b and the elements 17 define a modular structure 18 housed inside the casing 10.

More in detail, the modular structure 18 comprises a plurality of modules M sequentially repeated along the direction X.

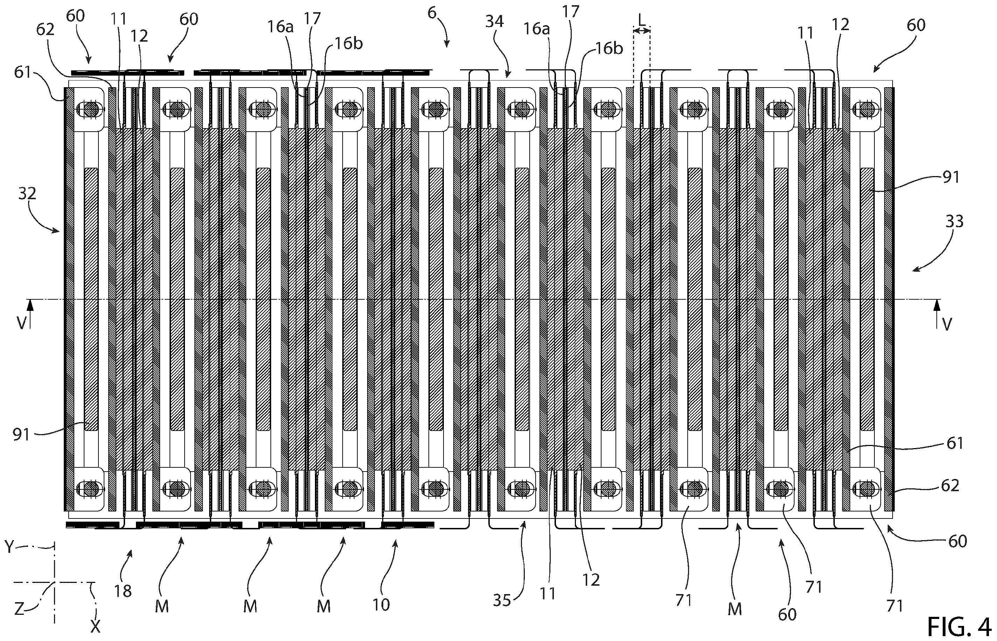

Each module M comprises, proceeding along the direction X (Figures 4, 5 and 6):
- a cell 11;
- a heat dissipation and mechanical structure layer 16a;
- a thermal and flame separation element 17;
- a heat dissipation and a mechanical structure layer 16b; and
- a cell 12.

The module M further comprises a thermostructural glue layer located between opposite ends of the cells 11, 12, of the element 17 and of the layers 16a, 16b and the respective walls 34, 35.

The battery pack 6 further comprises a plurality of transmission assemblies 60 designed to convert the increase in thickness L of the cells 11, 12 along the direction X into a movement along the direction Z of a plurality of plates 41, 42.

More in detail, the transmission assembly 60 is configured so that the extent of the movement of the plates 41, 42 parallel to the direction Z is, by way of non-limiting example, smaller than the increase in thickness L of the cells 11, 12.

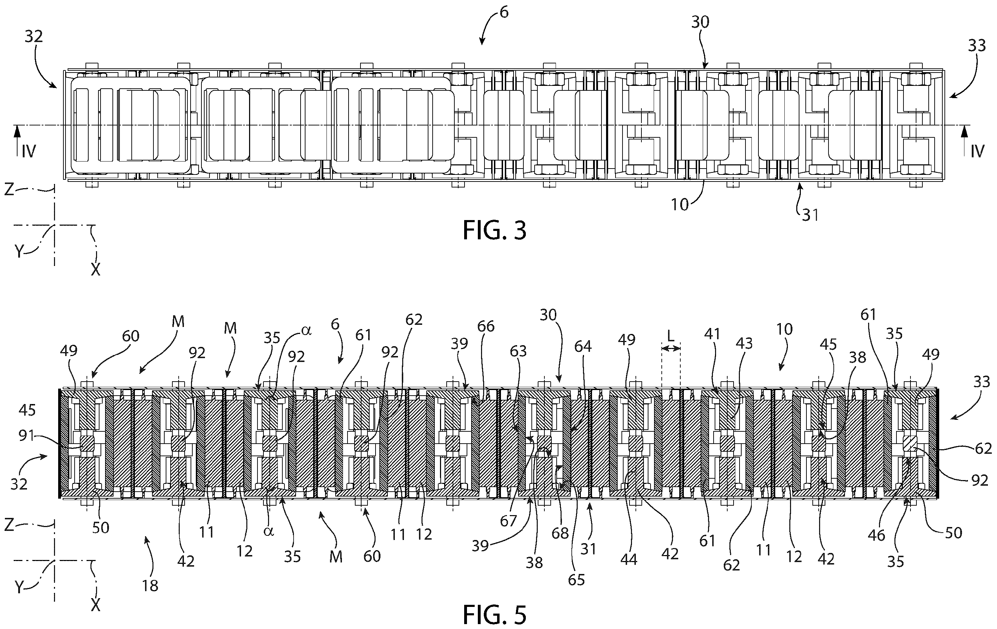

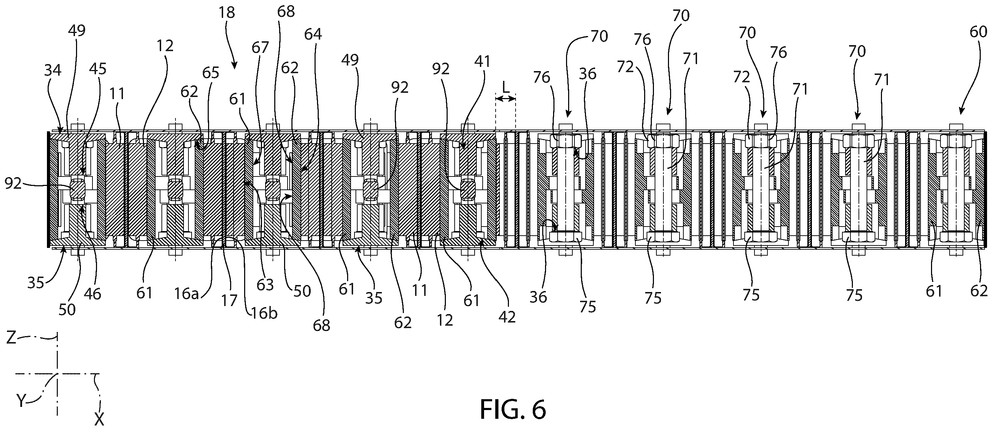

With reference to Figures 5 and 6, a transmission assembly 60 closest to the wall 32 is interposed between the wall 32 and the module M closest to the wall 32. A plurality of transmission assemblies 60 are each interposed between a respective pair of modules M adjacent to one another parallel to the direction X. A transmission assembly 60 closest to the wall 33 is interposed between the module M closest to the wall 33 and the wall 33 itself.

More in particular, the transmission assemblies 60 are spaced apart from one another parallel to the direction X.

Hereinafter, reference will be made to one single transmission assembly 60, the transmission assemblies 60 being substantially identical to one another.

In particular, reference will be made to a transmission assembly 60 interposed between two modules M immediately consecutive to one another parallel to the direction X.

Advantageously, each transmission assembly 60 comprises:
- a pair of pushing members 61, 62 movable relative to the casing 10 parallel to the direction X and in contact with respective cells 11, 12 of modules M that are adjacent to one another, so as to be movable parallel to the direction X following the increase in thickness L of the cells 11, 12; and
- a pair of plates 41, 42 movable relative to the casing 10 parallel to the direction Z and operatively connected to respective pushing members 61, 62, so as to be movable along the direction Z following the movement of the respective pushing members 61, 62 parallel to the direction X.

The plates 41, 42 are elongated parallel to the direction Y and the pushing members 61, 62 are also elongated parallel to the direction Y.

More in detail, each pushing member 61 (62) has the shape of a truncated cone and comprises:
- a respective base surface 63 (64) in contact with a respective cell 12; 11 of corresponding modules M next to one another and lying on a plane orthogonal to the direction X;
- a respective base surface 67 (68) opposite the corresponding surface 63 (64), parallel to the respective surface 63 (64) and also lying on a plane orthogonal to the direction X; and
- a respective truncated-cone surface 65 (66) with an axis parallel to the direction X and a vertex on a middle plane of the casing 10 orthogonal to the direction Z.

The surfaces 65, 66 have a taper angle α.

The surface 65 is tapered towards the surface 66, proceeding from the surface 63 of the pushing member 61 towards the surface 64 of the pushing member 62 parallel to the direction X.

Similarly, the surface 66 is tapered towards the surface 65, proceeding from the surface 64 of the pushing member 32 towards the surface 63 of the pushing member 61 parallel to the direction X.

Furthermore, the pushing members 61; 62 are opposite one another along the direction X so that the surfaces 67, 68 face one another parallel to the direction X and are interposed between the surfaces 63, 64.

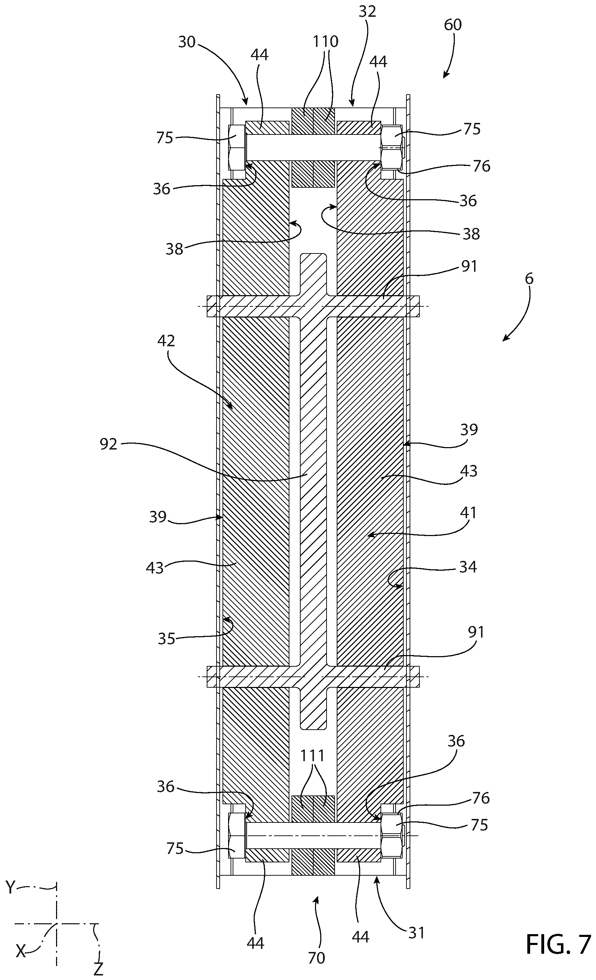

Each plate 41, 42 comprises (Figure 7), in greater detail:
- a main portion 43 elongated along the direction Y; and
- a pair of end portions 44, which are opposite one another relative to the direction Y and between which the main portion 43 extends.

The end portions 44 extend parallel to the direction Y for a smaller length than the main portion 43.

Furthermore, each plate 41, 42 is delimited, on opposite sides with respect to the direction Z, by:
- a surface 38 lying on a plane orthogonal to the direction Z and delimiting both the main portion 43 and the end portions 44; and
- a surface 39 opposite the surface 38.

The surface 39 comprises, in turn:
- a wall 35 delimiting the main portion 43 on the side opposite the surface 38; and
- a pair of walls 36, between which the wall 35 is interposed and which delimit respective end portions 44 on the side opposite the surface 38.

The distance between the walls 36 and the surface 39 parallel to the direction Z is smaller than the distance between the wall 35 and the surface 39.

In other words, the height of the end portions 44 along the direction Z is smaller than the height of the main portion 43 along the direction Z.

The walls 35 are, in particular, flat and lie on a plane orthogonal to the direction Z.

Each main portion 43 comprises, in turn:
- a prismatic cross member 45, 46 opposite the wall 35 with reference to the direction Z; and
- a respective truncated-cone surface 49, 50 with an axis parallel to the direction Z and axially interposed between the respective cross member 45, 46 and the wall 35.

The plates 41, 42 are opposite one another along the direction Z and the respective surfaces 38 face one another.

The surfaces 49, 50 are tapered towards one another, proceeding from the surface 39 towards the surface 38 parallel to the direction Z.

The pushing members 61, 62 are interposed parallel to the direction X between the surfaces 49, 50 of the plates 41, 42.

More in detail, the surface 49 of the plate 41 is in contact with the surfaces 65, 66 of respective pushing members 61, 62.

The surface 50 of the plate 42 is in contact with the surfaces 67, 68 of respective pushing members 61, 62.

In this way, the increase in the thickness L of the cells 11, 12 causes the pushing member 61, 62 to move closer to one another along the direction X and, due to the coupling between surfaces 49; 65, 66 and 50; 67, 68, causes the plates 41, 42 to move away from one another along the direction Z.

The cross members 45, 46 extend symmetrically between the pushing members 61, 62 parallel to the direction X.

The battery pack 10 further comprises a plurality of bolts 70 arranged according to two rows parallel to the direction X and spaced apart from one another parallel to the direction Y.

In the specific case shown herein, each row of bolts 70 comprises ten bolts.

One row of bolts 70 is adjacent to the wall 34 and the other is adjacent to the wall 35.

Each transmission assembly 60 further comprises a pair of bolts 70 with an axis parallel to the direction Z and aligned with as well as opposite one another parallel to the direction Y.

Each bolt 70 comprises, in turn:
- a shank 71 defining a thread 72;
- a head 75 having a greater diameter than the shank 71 and associated with the plate 41; and
- a nut 76 screwed onto the thread 72 and associated with the plate 42.

The heads 75 of the bolts 70 strike against respective walls 36 of the respective plate 41.

The nuts 76 of the bolts 70 are screwed onto the respective threads 72 and strike against respective walls 36 of the respective plate 42.

The shank 71 of each bolt 70 goes through the end portions 43 of the plates 41, 42 of the respective transmission assembly 60 with a clearance.

The heads 75 and the nuts 76 of the respective bolts 70 are therefore in contact with the plates 41, 42 and constrained to the respective shanks 75 parallel to the direction Z.

Consequently, the increase in thickness L of the cells 11, 12 parallel to the direction X pushes, thanks to the conical coupling between the surfaces 65, 66 and 49, 50, the plates 41, 42 parallel to the direction Z and causes the elastic deformation of the heads 75 and of the nuts 76 of the respective bolts 70.

Since they are constrained to the shank 70 parallel to the direction Z, the heads 75 and the nuts 76 of the bolts 70 exert a force upon the respective plates 41, 42 substantially parallel to the direction Z.

This force stops the sliding of the plates 41, 42 parallel to the direction Z and, consequently, the sliding of the pushing members 61, 62 parallel to the direction X. A force F parallel to the direction X is thus exerted upon the cells 11, 12 and a consequent pressure is exerted upon the surface of the cells 11, 12.

As the thickness L increases, the deformation of the shank 71 increases and, consequently, the reaction of the head 75 and of the nut 76 on the plates 41, 42 increases and the force F and the consequent pressure on the cells 11, 12 increase.

With reference to figure 14, this force F has a linear trend with respect to the thickness L, when the shank 71 is deformed elastically, and non-linear trend, when the shank 71 is deformed plastically.

The transmission assembly 60 further comprises (Figure 7) :
- a pair of flanges 110 on top of one another parallel to the direction Z, crossed by the shank 75 of one of the respective bolts 70 and protruding one from the relative pushing member 61 and the other from the relative pushing member 62; and
- a pair of flanges 111 on top of one another parallel to the direction Z, crossed by the shank 71 of the other one of the respective bolts 70 and protruding one from the relative pushing member 61 and the other from the relative pushing member 62.

The flanges 110 (111) define respective through holes crossed by the shanks 71 and guarantee a mechanical control limit stop during assembly operations.

The transmission assembly 60 further comprises:
- a pair of rods 91 with an axis parallel to the direction Z, which are interposed along the direction Y between the respective bolts 70 and are fixed at axial ends of theirs to the walls 30, 31 of the casing 10; and
- a cross member 92 parallel to the direction Y and interposed parallel to the direction Z between the respective plates 41, 42.

The rods 91 and the cross members 92 guide the translation of the plates 41, 42 parallel to the axis Z.

In particular, the cross members 92 extend symmetrically relative to a middle plane orthogonal to the direction Z of the casing 10.

The cross members 92 are also spaced apart parallel to the direction Z from the surfaces 38 of the plates 41, 42 of the respective compensation assemblies 60.

The rods 91 project from respective opposite sides of the cross member 92 of the relative transmission assembly 60.

In use, the cells 11, 12 electrically connected to one another generate the voltage and energy density required for the battery pack 6 through an electrochemical reaction that takes place in the respective anode and cathode.

During the operation, the thickness L of the cells 11 12 parallel to the direction X increases from the minimum value Lbol to the maximum value Leol (Figure 15).

Hereinafter, the operation of the battery pack 6 will be described with reference to one single transmission assembly 60 and to the cells 11, 12 adjacent thereto of respective modules M adjacent to one another.

The increase in thickness L pushes the pushing members 61, 62 parallel to the direction X and towards one another.

Following the coupling between the conical surfaces 65, 66 of the pushing members 61, 62 parallel to the direction X and the conical surfaces 49, 50 of the plates 41, 42 parallel to the direction Z, the plates 41, 42 are pushed parallel to the direction Z according to opposite directions.

As a result, the action of the surfaces 38 of the plates 41, 42 first elastically and then plastically deforms the heads 75 and the nuts 76, which are constrained to the respective shanks 70 parallel to the direction Z.

The heads 75 and the nuts 76 therefore exert a reaction parallel to the direction Z upon the plates 41, 42.

The plates 41, 42 transmit this reaction to the pushing members 61, 62 parallel to the direction X.

The pushing members 61, 62 exert, in turn, respective forces F parallel to the direction X upon corresponding cells 11, 12. These forces F generate a pressure on the cells 11, 12.

As the thickness L increases, the elastic deformation of the heads 75 and of the nuts 76 increases and, consequently, the reaction of the head 75 and of the nut 76 on the plates 41, 42 increases and the forces F exerted upon the cells 11, 12 increase, as shown in Figure 14.

In particular, the compression force F exerted upon the cells 11, 12 increases from the minimum value Fbol to the maximum value Feol, as shown in Figure 14.

The force F is determined by the elastic deformation of the head 75 and of the nut 76 for values ranging from a minimum value Fbol to a value FS and, in case of plastic deformation, from the value FS to the maximum force value Feol (Figure 14).

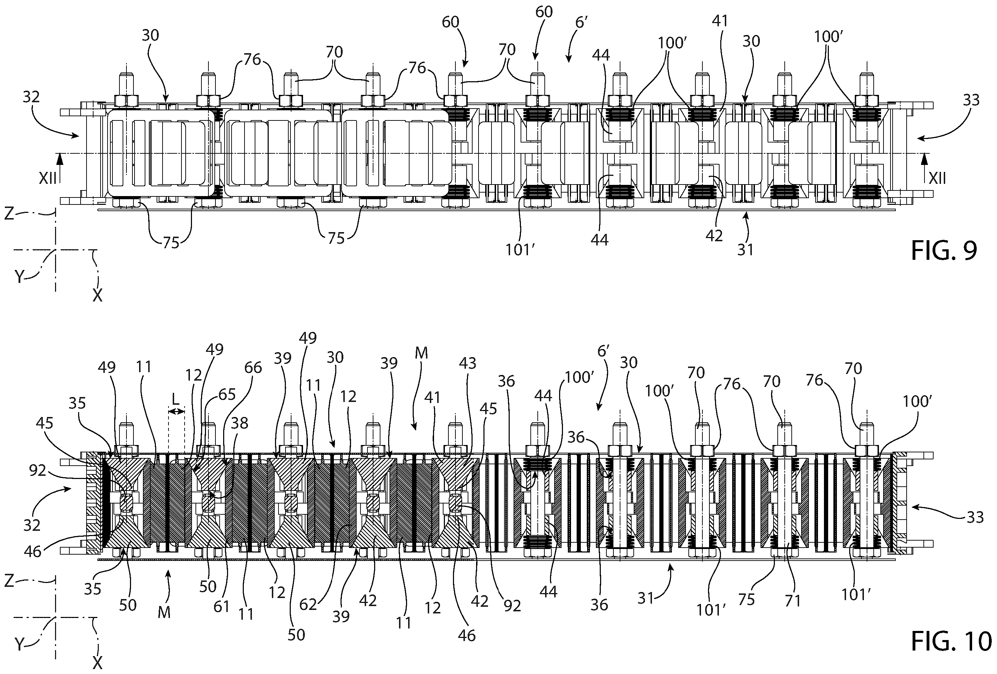

With reference to Figures 9 a 13, number 6' indicates a battery pack according to a further embodiment of the invention.

The battery pack 6' is similar to the battery pack 6 and will be described below only to the extent that it differs from the latter; equal or equivalent parts of the battery packs 6, 6' will be indicated, when possible, with the same reference numbers.

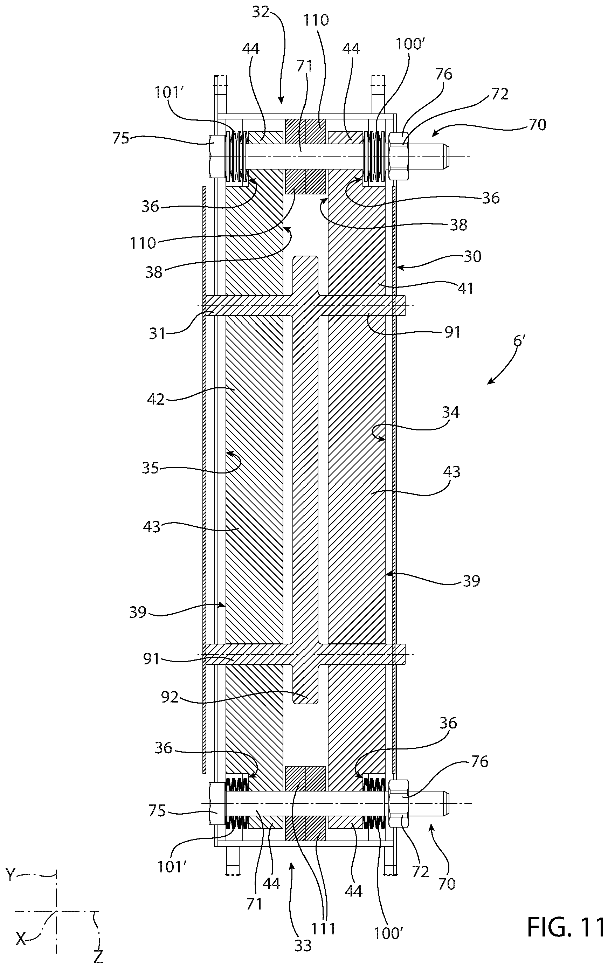

More in detail, the transmission assembly 60' of the battery pack 6' differs from the transmission assembly 60' of the battery pack 6 in that it comprises (Figures 9 to 11) :
- a plurality of springs 100' interposed parallel to the direction Z between the surfaces 38 of the plate 41 and respective nuts 76 of the bolts 70; and
- a plurality of springs 101' interposed parallel to the direction Z between respective surfaces 38 of the plate 42 and corresponding heads 75 of the bolts 70.

In the specific case shown herein, the springs 100', 101' are helical springs having respective axes parallel to the direction Z.

The stiffness of each bolt 70, in particular of the head 75 and of the nut 76, parallel to the direction Z is much greater than the stiffness of the respective springs 100, 100'.

The transmission assembly 60' differs from the transmission assembly 60 in that the surfaces 49, 50 have a taper angle α' equal to the taper angle of the surfaces 65, 66 and greater than the taper angle α.

The transmission assembly 60' further differs from the transmission assembly 60 in that the heads 75 and the nuts 76 protrude from the walls 30, 31 on the outside of the casing 10.

The operation of the battery pack 6' is similar to the one of the battery pack 6 and, therefore, it is described in detail only as far as it differs from it.

In particular, the operation of the battery pack 6' differs from that of the battery pack 6 in that the movement of the plates 41, 42 of the battery pack 6' parallel to the direction Z is greater than the movement of the plates 41, 42 of the battery pack 6', given the same increase in thickness L of the cells 11, 12 and, therefore, the same movement of the pushing members 61, 62 parallel to the direction Z. This is determined by the fact that the taper angle α' is greater than the taper angle α.

The operation of the battery pack 6' also differs from that of the battery pack 6 in that the movement of the plates 41, 42 parallel to the direction Z first determines the compression of the springs 100', 101' and, once the springs 100', 101' have been compressed, the elastic and then plastic deformation of the heads 75 and the nuts 76 of the respective bolts 70.

The force F' exerted upon the cells 11, 12 by the transmission assembly 60 differs from the force F in that it corresponds to the sum of the elastic force F1 exerted by the springs 100', 101' and of the force F2 due to the first elastic and then plastic deformation of the heads 75 and of the nuts 76.

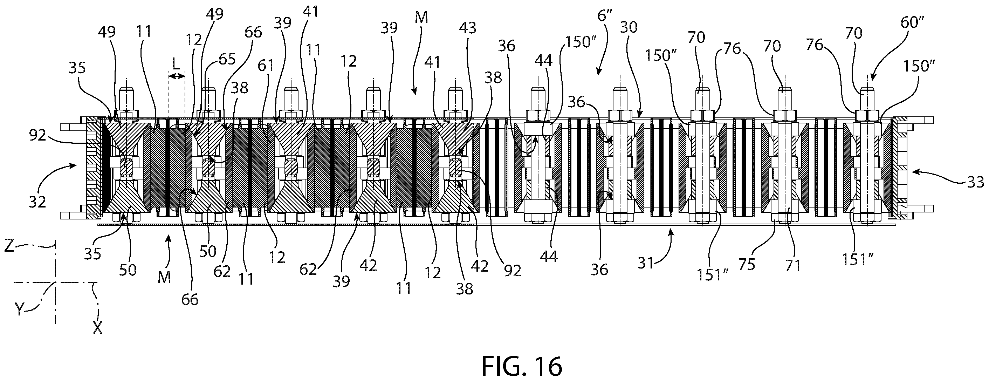

With reference to figures 16, number 6" indicates a battery pack according to a third embodiment of the invention.

The battery pack 6" is similar to the battery pack 6 and will be described below only to the extent that it differs from the latter; equal or equivalent parts of the battery packs 6, 6' will be indicated, when possible, with the same reference numbers.

In particular, the transmission assembly 60" of the battery pack 6" differs from the transmission assembly 60 in that it comprises a pair of actuators 150" , 151" capable of causing a desired movement of the respective plates 41, 42 parallel to the direction Z.

In the specific case shown herein, the actuator 150", 151'' is electromechanical. More in particular, the actuator 150" , 151'' is a piezoelectric actuator configured to receive an input voltage and to cause a movement of the corresponding plate 41, 42 associated with said voltage.

The operation of the battery pack 6" differs from that of the battery pack 6 in that the activation of the actuator 150" , 151 " determines a desired movement of the plates 41, 42 parallel to the direction Z and, therefore, of the pushing members 61, 62 parallel to the direction X.

A desired force value F parallel to the direction Z is thus exerted upon the cells 11, 12 and a corresponding pressure value is exerted upon the cells 11, 12.

The features of the battery packs 6, 6', 6" and of the method according to the invention reveal evident advantages that can be obtained using them.

In particular, each transmission assembly 60, 60', 60'' comprises:
- a pair of pushing members 61, 62 movable relative to the casing 10 parallel to the direction X and in contact with respective cells 11, 12 of modules M that are adjacent to one another, following the increase in thickness L of the cells 11, 12;
- a pair of plates 41, 42 operatively connected to respective pushing members 61, 62 and movable relative to the casing 10 parallel to the direction Z, so as to be movable along the direction Z following the movement of the respective pushing members 61, 62 parallel to the direction X.

It is thus possible to transform the increase in thickness L of the cells 11, 12 into a movement parallel of the plates 41, 42 to the direction Z.

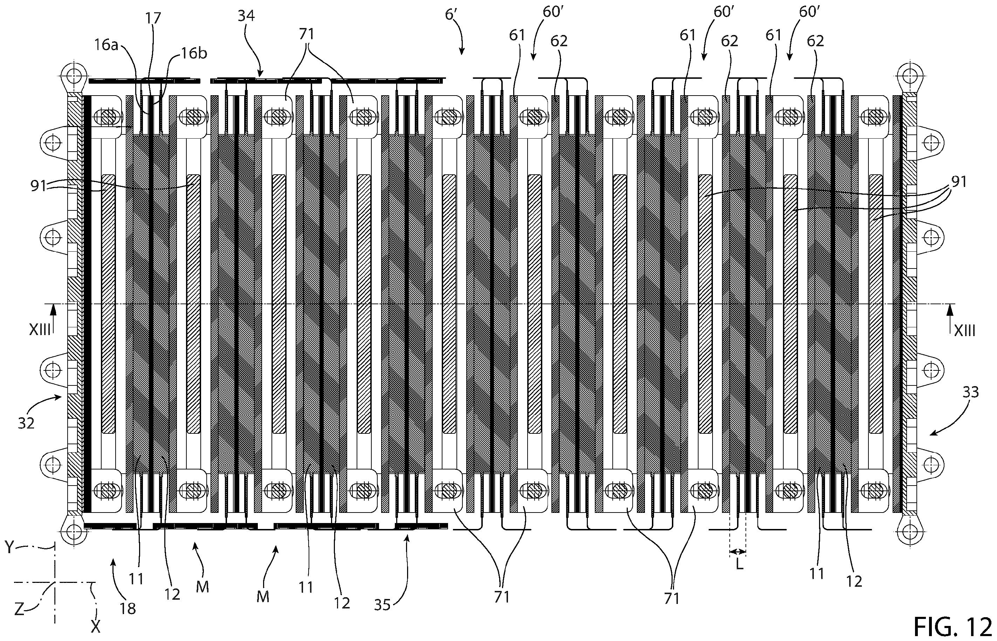

Consequently, it is possible to exert the increasing force F upon the cells 11, 12 as the thickness L increases by means of:
- the elastic and then plastic deformation of the heads 75 and of the nuts 76 in the battery pack 6 (Figures 2 to 8); or
- the elastic deformation of the springs 100', 101' and the elastic and then plastic deformation of the head 75 and of the nut 76 in the battery pack 6 (Figures 9 to 14).

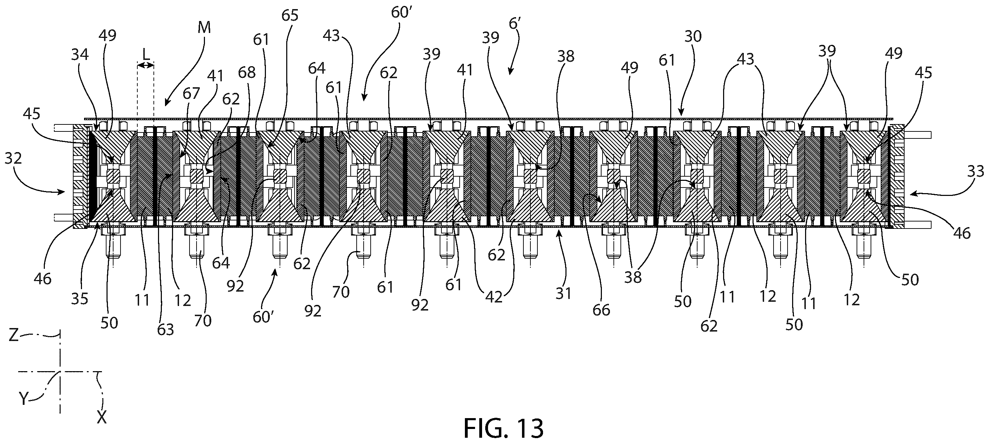

In this way, the force values F exchanged between the bolts 70 and the cells 11, 12 are drastically reduced compared to those typical of the known solutions described in the introduction to this description, as visible from a comparison between Figures 13 and 14.

For example, the ratio between the maximum value Feol and the minimum value Fbol of the forces is equal to 3 for the battery pack 6, 6' (Figure 15) and equal to 10 in the known solutions described in the introduction to this description (Figure 14).

Therefore, the overall dimensions, weights and costs of the entire battery pack 6, 6', 6" can be reduced.

The conical coupling between the surfaces 49; 50 of the plates 41, 42 and the surfaces 65, 66; 67, 68 of the corresponding pushing members 61, 62 further reduces the dimensions of the compensation assembly 30 and, consequently, of the battery pack 6, 6', 6".

The actuators 150" , 151" can be operated so as to cause a desired movement of the respective plates 41, 42 parallel to the direction Z and thus exert, by means of the pushing members 61, 62 coupled to the plates 41, 42, a force value F upon the cells 11, 12 that can be adjusted as desired based on the different operating conditions of the battery pack 6".

Finally, the battery pack 6, 6', 6" and the method disclosed and shown herein can be subject to changes and variants, which do not go beyond the scope of protection set forth in the appended claims.

In particular, the transmission assembly 60, 60', 60" could comprise one single plate 41, 42.

The bolts 70 could also be split pins or welded pins.

## Claims

1. A battery pack (6, 6', 6") for an electrically driven road vehicle (1), comprising:
- a casing (10);
- at least one first electrochemical cell (11, 12) comprising, in turn, a cathode, an anode and a solid electrolyte electrically connected to said cathode and anode; said first cell (11, 12) having a first thickness (L) along a first direction (X) increasing, in use, following the activation of said first cell (11); said first cell (11, 12) being accommodated inside said casing (10) ;
**characterized in that** it comprises:
- a first pushing member (61, 62) movable relative to said casing (10) parallel to said first direction (X) and operatively connected to said first cell (11, 12), so as to be movable parallel to the first direction (X) following the increase in said thickness (L);
- a first element (41, 42) movable relative to said casing (10) along a second direction (Z) transverse to said first direction (X) and operatively connected to said first pushing member (61, 62) so as to be movable along said second direction (Z) following the movement of said first pushing member (61, 62) along said first direction (X).

2. The battery pack according to claim 1, **characterized in that** it comprises a second element (70, 75) interacting with said first element (41, 42) along said second direction (Z) and deformable so that said first pushing member (61, 62) exerts a force (F) upon said first cell (11, 12) progressively increasing as said thickness (L) increases and with a component parallel to said first direction (X).

3. The battery pack according to claim 1 or 2, **characterized in that** said first pushing member (61, 62) and said first element (41, 42) comprises a first conical surface (65, 66) and a second conical surface (49, 50), respectively, coupled to one another;
said first surface (65, 66) being conical according to a first axis parallel to said first direction (X) and said second surface (49, 50) being conical according to a second axis parallel to said second direction (Z).

4. The battery pack according to any one of the preceding claims, **characterized in that** said second element (70, 75) is subjected, in use, to an elastic deformation at first and then to a plastic deformation, following the increase in said thickness (L).

5. The battery pack according to any one of the preceding claims, **characterized in that** it comprises:
- at least one second electrochemical cell (11, 12) next to said first cell (11, 12) along said first direction (X); and
- at least one second pushing member (62, 61) movable relative to said casing (10) parallel to said first direction (X) and operatively connected to said second cell (12, 11) so as to be movable parallel to the first direction (X) following the increase in said thickness (L) of said second cell (12, 11); and said first and second pushing members (61, 62) being interposed between said first and second cells (11, 12) along said first direction (X) ;
said first element (41, 42) being operatively connected both to said first pushing member (61, 62) and to said second pushing member (62, 61) so as to be movable along said second direction (Z) following the movement of said first and second pushing members (61, 62) along said first direction (X).

6. The battery pack according to claim 5, **characterized in that** it comprises:
- a further first element (42, 41) facing said first element (41, 42) parallel to said second direction (Z) and also operatively connected to both to said first pushing member (61, 62) and to said second pushing member (62, 61) so as to be movable along said second direction (Z) following the movement of said first pushing member (61, 62) and second pushing member (62, 61) along said first direction (X); and
- a further second element (70 76) fixed relative to said casing (10) with reference to said second direction (Z), operatively connected to said further first element (62, 61) and deformable so that said first pushing member (61, 62) and second pushing member (62, 61) exert a respective force (F) upon said respective first cell (11) and second cell (12) increasing as said thickness (L) increases and with a component parallel to said first direction (X);
said first element (70, 75) and said further first element (70, 76) being interposed along said first direction (X) between said first cell (11) and second cell (12);
said second element (70, 75) and further second element (70, 76) being interposed along said first direction (X) between said first element (41, 42) and further first element (42, 41).

7. The battery pack according to claim 6, **characterized in that** it comprises a bolt (70) consisting of:
- a shank (71) defining a thread (72);
- a head (75) having a greater diameter than said thread (72) and integral to said shank (71); and
- a threaded nut (76) screwed on said thread (72) and constrained to said shank (71) parallel to said second direction (Z);
said first element (41, 42) and said second element (41, 42) comprising at least one first portion (44) axially interposed between said nut (75) and said thread (72) and surrounding said shank (71);
said head (75) and said nut (76) defining said second element (70, 75) and said further second element (70, 76), respectively.

8. The battery pack according to claim 6 or 7, **characterized in that** each first element (41, 42) comprises a pair of first portions (44) and a second portion (43) interposed between said first portions (44) parallel to a third direction (Y) orthogonal to said first direction (X) and second direction (Z);
said first portion (44) defining said second surface (49, 50);
said first portions (44) being each axially interposed between said nut (75) and said thread (72) of a respective bolt (70).

9. The battery pack according to claim 8, **characterized in that** said first element (41, 42) strikes against said second element (70; 75, 76) parallel to said second direction (Z).

10. The battery pack according to any one of the claims from 6 to 8, **characterized in that** it comprises a spring (100', 101') interposed between said first element (41, 42) and said second element (70; 75, 76) parallel to said second direction (Z).

11. The battery pack according to any one of the claims from 1 to 9, **characterized in that** it comprises an actuator (150", 151''), in particular a piezoelectric actuator, interacting, in use, with said first element (41, 42) and controllable so as to cause the first element (41, 42) to make a desired movement.

12. The battery pack according to any one of the claims from 7 to 11, **characterized in that** it comprises:
- a plurality of modules (M) next to one another parallel to said first direction (X); said consecutive modules (M) along said first direction (X) comprising one said first cell (11) and the other said second cell (12);
- a plurality of transmission assemblies (60, 60', 60"), each interposed between a pair of said consecutive modules (M) along said first direction (X);
said transmission assembly (60, 60', 60'') comprising, in turn:
- a respective first pushing member (61) and a respective second pushing member (62);
- a respective first element (41) and a respective further first element (42);
- said bolt (70) and a further bolt (70) each interacting with the respective first element (41) and further first element (42).

13. A method for the compensation of the variation of a thickness (L) along a first direction (X) of an electrochemical cell (11, 12) for a battery pack (6) for an electric or hybrid road vehicle (1);
- said cell (11, 12) comprising, in turn, a cathode, an anode and a solid electrolyte electrically connected to said cathode and anode and being accommodated in a casing (10);
said method comprising the steps of:
i) activating said cell (11, 12) so as to determine an increase in said first thickness (L) of the cell (11, 12) along said first direction (X);
**characterized in that** it comprises the steps of:
ii) - moving a first pushing element (61, 62) relative to said casing (10) parallel to said first direction (X), following the increase in said thickness (L) of said first cell (11); and
iii) - moving a first element (41, 42) relative to said casing (10) along a second direction (Z) transverse to said first direction (X), following the movement of said first pushing member (61, 62) along said first direction (X) .

14. The method according to claim 13, **characterized in that** it comprises the step iv) of deforming a second element (70; 75, 76), which is fixed relative to said casing (10), following the movement of said first element (41, 42), so that said first pushing member (61, 62) exerts a force (F) upon said cell (11, 12) increasing as said thickness (L) increases and with a component parallel to said first direction (X).

15. The method according to claim 14, **characterized in that** said step iv) comprises the step v) of deforming said second element (70; 75, 76) in an elastic manner at first and then in a plastic manner, following the increase in said thickness (L).

16. The method according to claim 15, **characterized in that** said step iv) comprises the step vi) of elastically deforming a spring (100', 101') interposed between said first element (41, 42) and said second element (70; 75, 76) parallel to a second direction (Z) orthogonal to said first direction (X).

17. The method according to claim 13, **characterized in that** it comprises the step vi) of determining an adjustable movement of said first element (41, 42) by means of an actuator (150'', 151"), in particular a piezoelectric actuator, acting upon said first element (41, 42) .
